# FASCICULE DE BREVET EUROPEEN

(11) **EP 2 435 685 B1**
(45) Date de publication et mention de la délivrance du brevet: **29.03.2017**
(21) Numéro de dépôt: 10724370.1
(22) Date de dépôt: 27.05.2010
(51) Int. Cl.: F02K 1/82

(54) **TURBOMOTEUR COMPORTANT UN CONE DE GUIDAGE DES GAZ D'ECHAPPEMENT AVEC UN ATTENUATEUR SONORE**
FLUGGASTURBINE MIT SCHALLDÄMPFER IM ABGASENDSTÜCK
GAS TURBINE ENGINE COMPRISING EXHAUST CONE WITH INTEGRATED MUFFLER

(30) Priorité: 27.05.2009 FR 0953495
(43) Date de publication de la demande: 04.04.2012
(73) Titulaire: Safran Helicopter Engines, 64510 Bordes (FR)
(72) Inventeur: BOUTY, Eric, Jean-Louis, F-64000 Pau (FR); REGAUD, Pierre-Luc, F-64000 Pau (FR); VALLON, Antoine, F-64000 Pau (FR)
(74) Mandataire: Gevers & Orès
(86) Numéro de dépôt international: PCT/EP2010/057363
(87) Numéro de publication internationale: WO 2010/136545

(56) Documents cités:
- FR-A1- 2 405 367
- FR-A1- 2 898 940
- US-A- 4 064 961
- US-A- 4 137 992
- US-A- 4 226 297

## Description

L'invention concerne le domaine des turbomoteurs à gaz à turbine libre et plus particulièrement l'atténuation du bruit généré par un moteur d'hélicoptère.

Par la suite, on définit les termes « amont » et « aval » en fonction du sens de circulation des gaz dans le moteur d'hélicoptère, les gaz circulant d'amont vers l'aval dans ledit moteur.

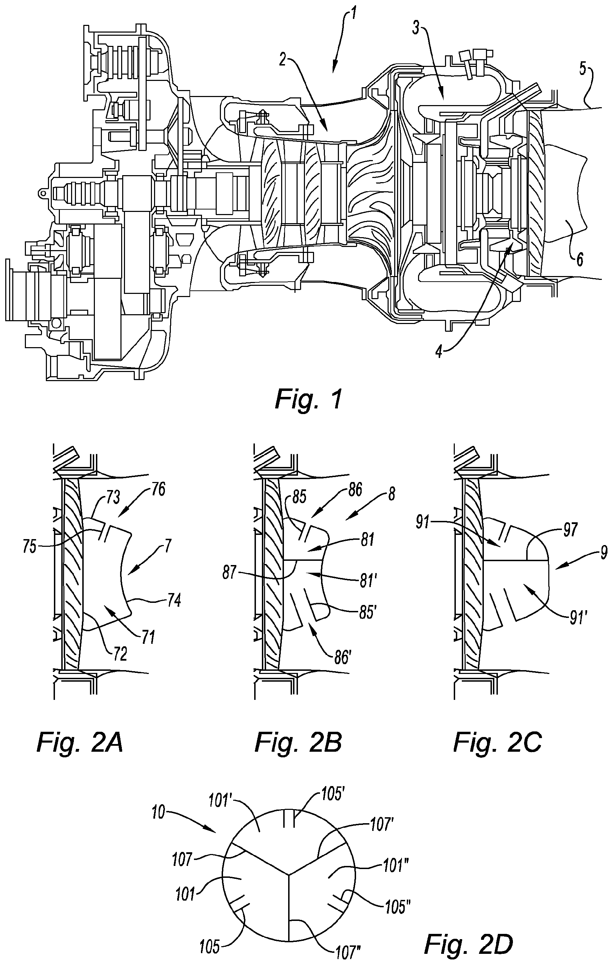

Un moteur d'hélicoptère, en particulier un turbomoteur tel que représenté sur la figure 1, comprend de manière classique, d'amont en aval, un compresseur 2, une chambre de combustion annulaire 3 une turbine haute pression, et une turbine libre axiale 4, récupérant l'énergie de la combustion pour entraîner la voilure de l'hélicoptère, les gaz d'échappement issus de la combustion étant évacués du moteur par une tuyère d'échappement 5 ménagée en aval de la turbine libre 4.

La turbine libre 4 est terminée à son extrémité aval par une pièce tronconique axiale 6, et une tuyère, l'ensemble remplissant une fonction de guidage du flux de gaz d'échappement afin d'assurer un écoulement aérodynamique du flux en sortie de la turbine libre 4.

Au cours de son fonctionnement, un moteur d'hélicoptère génère des ondes sonores qui forment le bruit du moteur. Le bruit du moteur est une composante significative de l'émission sonore globale d'un hélicoptère. Afin de diminuer le bruit d'un hélicoptère, on cherche à diminuer le bruit propre du moteur.

Les ondes sonores, émises par le moteur à l'aval, sont générées principalement lors de la combustion et lors de la rotation des turbines. Les ondes sonores ont des fréquences différentes comprises dans la plage audible allant de 20Hz à 20kHz. Les ondes sonores de fréquences basses, c'est-à-dire inférieures à 400 Hz, participent de manière significative au bruit du moteur d'hélicoptère.

Il est déjà connu des systèmes « antibruit » permettant d'atténuer les ondes sonores émises par le moteur. Un système antibruit selon l'art antérieur se présente généralement sous la forme d'un module externe monté en aval du moteur. Outre son encombrement important, un tel système antibruit présente l'inconvénient d'être distant de la source de bruit.

Il est souhaité d'intégrer le système antibruit directement dans le moteur afin d'augmenter la compétitivité du moteur en tant que tel en terme de bruit. Cependant, une telle intégration présente de nombreuses difficultés techniques étant donné que les éléments du moteur sous soumis à des fortes contraintes tant mécaniques que thermiques. L'intégration d'un système antibruit dans un moteur d'hélicoptère représente un véritable défi technologique.

A cet effet, l'invention concerne un turbomoteur à gaz, dans lequel circulent des gaz d'amont en aval, comprenant une chambre de combustion, une turbine haute pression, une turbine libre disposée en aval de la turbine haute pression agencée pour recevoir des gaz de combustion issus de ladite chambre de combustion, et un cône de guidage des gaz d'échappement fixé à ladite turbine libre en aval de cette dernière, le turbomoteur émettant des ondes sonores au cours de son fonctionnement, turbomoteur caractérisé par le fait que le cône de guidage comprend un atténuateur sonore agencé pour atténuer les ondes sonores émises par le turbomoteur.

Le cône de guidage remplit simultanément une fonction de guidage des gaz d'échappement et une fonction d'atténuation des ondes sonores émises par le moteur, permettant d'obtenir un moteur performant, moins bruyant, tout en conservant un encombrement réduit et une masse acceptable.

Selon une forme préférée de l'invention, l'atténuateur sonore présente une structure de résonateur d'Helmholtz.

Un tel résonateur peut être réalisé en tirant partie de la structure du cône de guidage sans modifications complexes et altérations des performances de guidage du flux de gaz d'échappement.

En outre, un résonateur d'Helmholtz est particulièrement adapté pour atténuer les basses fréquences ce qui est très avantageux dans le cas présent du fait que les ondes sonores de basses fréquences participent de manière significative à la formation du bruit. Par ailleurs, le résonateur d'Helmholtz est placé à proximité des sources de bruit ce qui permet d'atténuer les ondes sonores « à la source » en évitant leur propagation.

De préférence, le cône de guidage comprend une cavité intérieure de résonance dans laquelle s'étend un col agencé pour mettre en communication la cavité de résonance du cône de guidage avec l'extérieur du cône de guidage.

De préférence encore, la longueur du col, le volume de la cavité de résonance et la section du col sont adaptés de manière à ce que la cavité de résonance du cône de guidage résonne à une fréquence de résonnance f prédéterminée, de préférence inférieure à 400 Hz.

Le résonateur est paramétrable afin que sa fréquence de résonance corresponde parfaitement à la fréquence des ondes sonores à atténuer.

Selon une forme de réalisation particulière de l'invention, le cône de guidage comprend une cloison de partition intérieure agencée pour limiter le volume de la cavité de résonance et favoriser cet accord en fréquence.

Selon une autre forme de réalisation de l'invention, le cône de guidage comprend au moins une cloison de partition intérieure agencée pour compartimenter le volume intérieur total du cône de guidage en au moins une première cavité de résonance et une deuxième cavité de résonance ayant respectivement une première fréquence de résonance f₁ et une deuxième fréquence de résonance f₂.

De préférence, les première et deuxième fréquences de résonance f₁, f₂ sont différentes et inférieures à 400 Hz.

Ce traitement diffère d'un traitement acoustique à l'intérieur du corps central d'une tuyère de turboréacteur tel que décrit dans la demande de brevet au nom de Snecma FR-A-2.898.940. Selon le traitement décrit dans cette demande de brevet, le corps central comporte une cavité unique de résonance communiquant par une pluralité d'orifices le long de la paroi avec la veine de gaz annulaire guidé dans la tuyère.

L'invention sera mieux comprise à l'aide du dessin annexé sur lequel :
- la figure 1 représente une vue en coupe axiale d'un turbomoteur d'hélicoptère selon l'art antérieur ;
- la figure 2A représente une vue en coupe axiale d'une première forme de réalisation d'un cône de guidage selon l'invention ;
- la figure 2B représente une vue en coupe axiale d'une deuxième forme de réalisation d'un cône de guidage selon l'invention,
- la figure 2C représente une vue en coupe axiale d'une troisième forme de réalisation d'un cône de guidage selon l'invention, et
- la figure 2D représente une vue en coupe transversale d'un autre exemple de réalisation d'un cône de guidage selon l'invention.

Un turbomoteur d'hélicoptère 1 comprend d'amont en aval, un compresseur 2, une chambre de combustion annulaire 3 et une turbine libre axiale 4, récupérant l'énergie de la combustion pour entraîner la voilure de l'hélicoptère, en particulier les pales de rotors. Les gaz d'échappement issus de la combustion sont évacués du moteur par une tuyère d'échappement circonférentielle 5 ménagée en aval de la turbine libre 4.

La turbine libre 4 est terminée à son extrémité aval par une pièce tronconique axiale creuse. Cette pièce remplit, avec la tuyère, une fonction de guidage du flux de gaz d'échappement afin d'assurer un écoulement aérodynamique sain du flux, sans créer de turbulences en sortie de la turbine libre

Dans une première forme de réalisation de l'invention, en référence à la figure 2A, la pièce tronconique axiale creuse ou cône de guidage 7 se présente sous la forme d'une coquille de révolution comprenant une paroi transversale amont 72 en forme de disque, et une paroi transversale aval 74, se présentant sous la forme d'une portion ici concave, mais pouvant être convexe ou plate, reliée par une surface latérale 73 tronconique, à la paroi transversale amont 72.

La pièce tronconique axiale creuse 7 délimite dans cette première forme de réalisation une unique cavité intérieure 71, dite cavité de résonnance 71, dans laquelle s'étend un col de résonnance 75 dont une extrémité débouche dans la cavité de résonance 71 et dont l'autre extrémité débouche dans la surface latérale 73 du cône 7 par un orifice 76. Dans cette forme de réalisation, le col de résonnance 75 se présente sous la forme d'un cylindre droit de section circulaire mais il va de soi qu'une section rectangulaire ou ovale pourrait également convenir, la surface de la section étant adaptée afin que la pièce tronconique axiale 7 forme un résonateur d'Helmholtz agencé pour atténuer les ondes sonores issues du moteur.

En effet, la pièce tronconique axiale 7 constitue un système antibruit, dit à « masses-ressort », permettant d'atténuer fortement les ondes sonores ayant une fréquence de résonance donnée. En fonction du volume de la cavité, de la longueur du col dans la cavité et de la section du col, il est possible de paramétrer la fréquence de résonnance du résonateur formé par la pièce tronconique axiale 7. Ainsi, de manière avantageuse, les ondes sonores, émises par le moteur et dont la fréquence est proche de celle du résonateur, sont atténuées par la pièce tronconique axiale 7 ce qui diminue le bruit du moteur.

De préférence, la pièce tronconique axiale 7 est particulièrement adaptée pour atténuer les ondes de fréquences basses, c'est à dire inférieures à 400 Hz. Ceci est très avantageux car ce sont les ondes de fréquences basses qui contribuent principalement au bruit du moteur.

Etant donné que le résonateur est intégré au moteur, les ondes sonores sont atténuées à la source de leur émission, évitant ainsi une propagation des ondes sonores.

Dans une seconde forme de réalisation de l'invention, en référence à la figure 2B, la pièce tronconique axiale ou cône de guidage 8 est compartimentée, une cloison de partition intérieure 87 délimitant une première cavité de résonnance 81 et une deuxième cavité de résonnance 81', la cloison 87 étant dans cet exemple de réalisation sensiblement perpendiculaire à un plan transversal.

Cette partition peut être réalisée de manière à obtenir deux cavités longitudinales, mais aussi comme illustré sur la figure 2B, grâce à une cloison placée parallèlement à l'axe. En effet, seul le volume de chaque cavité ainsi formées contribue à piloter la fréquence d'accord acoustique : ce sont des contraintes mécaniques qui dictent la forme du cloisonnage, les objectifs acoustiques fixant les volumes de chaque cavité.

Toujours en référence à la figure 2B, un premier col de résonnance 85, dont une extrémité débouche dans l'intérieur de la première cavité de résonance 81 et dont l'autre extrémité débouche dans la surface latérale 83 du cône 8 par un orifice 86, s'étend dans la première cavité de résonnance 81. De manière similaire, un deuxième col de résonnance 85', dont une extrémité débouche dans l'intérieur de la deuxième cavité de résonance 81 et dont l'autre extrémité débouche dans la surface latérale 83 du cône 8 par un orifice 86', s'étend dans la deuxième cavité de résonnance 81'.

Comme représenté sur la figure 2B, les volumes des cavités de résonance 81, 81', les longueurs et les sections des cols 85, 85' sont ici différents de manière à ce que chaque compartiment du cône 8 forme un résonateur d'Helmholtz ayant chacun une fréquence de résonnance propre.

Dans cet exemple, la pièce tronconique axiale 8 possède deux fréquences de résonnance f₁ et f₂ de valeurs proches afin d'atténuer les ondes sonores sur une bande passante de largeur comprise entre f₁ et f₂. A titre d'exemple, le cône de guidage permet d'atténuer des fréquences comprises entre 250 Hz et 350 Hz.

Il va de soi que les fréquences de résonnance f₁ et f₂ peuvent également être choisies pour correspondre aux fréquences les plus critiques du spectre fréquentiel du bruit du moteur. Ainsi, les ondes qui contribuent significativement au bruit du moteur sont atténuées directement par la pièce tronconique axiale 8.

Les fréquences de résonance f₁ et f₂ de la pièce tronconique axiale creuse 8 sont avantageusement paramétrables en modifiant la position de la cloison 87 et/ou en modifiant la longueur et la section du col 85, 85' dans chacune des cavités de résonance 81, 81'.

La pièce tronconique axiale creuse 8 permet de manière simultanée de guider le flux de gaz d'échappement en sortie de la turbine libre tout en formant un résonateur d'Helmholtz ayant plusieurs fréquences paramétrables. Un tel résonateur présente l'avantage d'être entièrement intégré au moteur, sans augmentation de l'encombrement.

En référence à la figure 2C représentant une troisième forme de réalisation de l'invention, on modifie la pièce tronconique axiale creuse ou cône de guidage 9 afin d'augmenter le volume global du cône de guidage 9. Cela permet de diminuer la fréquence de résonance du résonateur tout en conservant une qualité d'atténuation correcte. En effet, les fréquences de résonnance du cône de guidage 9 sont inversement proportionnelle à celles liées au volume des cavités de résonance telles que délimitées par la cloison de partition intérieure 97.

Une pièce tronconique 9 de plus grand volume permet d'augmenter la plage de paramétrage de la fréquence, ou des fréquences, de résonnance du résonateur.

La modification du volume du cône ne présente pas d'inconvénient du fait que le cône ne remplit qu'une fonction de guidage du flux de gaz d'échappement.

Il a été décrit des pièces tronconiques axiales comportant un à deux compartiments mais il va de soi qu'une pièce tronconique axiale ou cône selon l'invention pourrait comprendre plus de deux compartiments afin que le résonateur comprenne plus de deux fréquences de résonance.

Comme représenté sur la figure 2C, la paroi transversale aval de la pièce tronconique axiale 9 peut être convexe, la forme du cône résultant d'un compromis entre sa masse, ses performances de guidage et ses performances d'atténuation sonore.

Un autre exemple de réalisation est montré sur la figure 2D représentant la vue dans la direction axiale d'une variante de réalisation. Le volume intérieur du cône de guidage 10 est subdivisé en trois compartiments par des cloisons de partition longitudinales 107, 107' et 107" disposées radialement en Y. Des cols de résonance 105, 105' et 105" sont adaptés pour former les cavités de résonance 101, 101' et 101" associées aux compartiments.

## Revendications

1. Turbomoteur à gaz (1), dans lequel circulent des gaz d'amont en aval, comprenant une chambre de combustion (3), une turbine haute pression (4) disposée en aval de la chambre de combustion (3) agencée pour recevoir des gaz de combustion issus de ladite chambre de combustion (3), une turbine libre, et un cône (7, 8, 9, 10) de guidage des gaz d'échappement fixé à ladite turbine libre (4) en aval de cette dernière, le turbomoteur émettant des ondes sonores au cours de son fonctionnement, turbomoteur **caractérisé par le fait que** le cône de guidage (7, 8, 9, 10) comprend une cavité intérieure de résonance (71 ; 81, 81' ; 91, 91' ;101, 101', 101") dans laquelle s'étend un col (75 ; 85, 85' ; 95, 95' ;105, 105', 105") agencé pour mettre en communication la cavité de résonance (71 ; 81, 81' ; 91, 91' ;101, 101', 101") du cône de guidage (7, 8, 9, 10) avec l'extérieur du cône de guidage (7, 8, 9, 10) pour former un atténuateur sonore (7, 8, 9, 10) présentant une structure de résonateur d'Helmholtz, agencé pour atténuer les ondes sonores émises par le turbomoteur.

2. Turbomoteur selon la revendication 1, dans lequel la longueur du col (75, 85, 85', 95, 95' ;105, 105', 105"), le volume de la cavité de résonance (71, 81, 81', 91, 91' ; 101, 101', 101") et la section du col (75, 85, 85', 95, 95' ; 105, 105', 105") sont adaptés de manière à ce que la cavité de résonance (71, 81, 81', 91, 91' ; 101, 101', 101") du cône de guidage (7, 8, 9, 10) résonne à une fréquence de résonnance f prédéterminée.

3. Turbomoteur selon la revendication 2, dans lequel la fréquence de résonance f est inférieure à 400 Hz.

4. Turbomoteur selon l'une des revendications 1 à 3, dans lequel le cône de guidage (7, 8, 9, 10) comprend une cloison de partition intérieure (87, 97 ; 107, 107', 107") agencée pour limiter le volume de la cavité de résonance (71, 81, 81', 91, 91' ; 101, 101', 101 ").

5. Turbomoteur selon la revendication 1 à 4, dans lequel le cône de guidage (7, 8, 9) comprend une cloison de partition intérieure (87, 97) agencée pour compartimenter le volume total intérieur du cône de guidage (7, 8, 9) en au moins une première cavité de résonance (81, 91) et une deuxième cavité de résonance (81', 91') ayant respectivement une première fréquence de résonance f1 et une deuxième fréquence de résonance f2.

6. Turbomoteur selon la revendication 5, dans lequel les première et deuxième fréquences de résonance f1, f2 sont différentes et inférieures à 400 Hz.

7. Turbomoteur selon la revendication 5 dont le cône de guidage comprend plus de deux cloisons de partition.

## Patentansprüche

1. Gasturbinentriebwerk (1), in dem das Gas von stromaufwärts nach stromabwärts zirkuliert, das eine Verbrennungskammer (3), eine Hochdruckturbine (4), die stromabwärts von der Verbrennungskammer (3) angeordnet ist, die eingerichtet ist, Verbrennungsgas aufzunehmen, das von der Verbrennungskammer (3) stammt, eine freie Turbine, und einen Konus (7, 8, 9, 10) für die Führung von Abgas, der an der freien Turbine (4) stromabwärts von dem letzteren befestigt ist, umfasst, wobei das Turbinentriebwerk Schallwellen während des Betriebs emittiert, wobei das Turbinentriebwerk **dadurch gekennzeichnet ist, dass** der Führungskonus (7, 8, 9, 10) einen inneren Resonanzhohlraum (71 ; 81, 81' ; 91, 91' ; 101 , 101', 101") aufweist, in dem sich ein Hals (75 ; 85, 85' ; 95, 95' ; 105, 105', 105") erstreckt, der eingerichtet ist, um den Resonanzhohlraum (71 ; 81, 81' ; 91, 91' ; 101, 101', 101") des Führungskonus (7, 8, 9, 10) mit dem Äußeren des Führungskonus (7, 8, 9, 10) zu verbinden, um einen Schalldämpfer (7, 8, 9, 10) zu bilden, der eine Helmholtz-Resonatorstruktur aufweist, die eingerichtet ist, um Schallwellen, die von dem Turbinentriebwerk emittiert werden, zu dämpfen.

2. Turbinentriebwerk nach Anspruch 1, wobei die Länge des Halses (75, 85, 85', 95, 95' ; 105, 105', 105"), das Volumen des Resonanzhohlraums (71, 81, 81', 91 , 91' ; 101, 101', 101") und der Querschnitt des Halses (75, 85, 85', 95, 95' ; 105, 105', 105") eingerichtet sind, dass der Resonanzhohlraum (71, 81, 81', 91, 91' ; 101, 101', 101") des Führungskonus (7, 8, 9, 10) bei einer vorbestimmten Resonanzfrequenz f mitschwingt.

3. Turbinentriebwerk nach Anspruch 2, wobei die Resonanzfrequenz f kleiner als 400 Hz ist.

4. Turbinentriebwerk nach einem der Ansprüche 1 bis 3, wobei der Führungskonus (7, 8, 9, 10) eine innere Trennwand (87, 97 ; 107, 107', 107") umfasst, die eingerichtet ist, um das Volumen des Resonanzhohlraums (71, 81, 81', 91, 91' ; 101, 101', 101") zu begrenzen.

5. Turbinentriebwerk nach Anspruch 1 bis 4, wobei der Führungskonus (7, 8, 9) eine innere Trennwand (87, 97) umfasst, die eingerichtet ist, das Gesamtvolumen innerhalb des Führungskonus (7, 8, 9) in zumindest einen ersten Resonanzhohlraum (81, 91) und einen zweiten Resonanzhohlraum (81', 91') zu unterteilen, die jeweils eine erste Resonanzfrequenz f1 und eine zweite Resonanzfrequenz f2 haben.

6. Turbinentriebwerk nach Anspruch 5, wobei die erste und zweite Resonanzfrequenzen f2, f2 verschieden und kleiner als 400 Hz sind.

7. Turbinentriebwerk nach Anspruch 5, wobei der Führungskonus mehr als zwei Trennwände umfasst.

## Claims

1. A gas turbine engine (1) through which gases flow from upstream to downstream, comprising a combustion chamber (3), a high-pressure turbine (4) positioned downstream of the combustion chamber (3) designed to receive combustion gases emanating from said combustion chamber (3), a free turbine and a cone (7, 8, 9, 10) for guiding the exhaust gases which is fixed to said free turbine (4) downstream thereof, the turbine engine emitting sound waves as it operates, which turbine engine is **characterized in that** the guide cone (7, 8, 9, 10) comprises an interior resonant cavity (71; 81, 81'; 91, 91'; 101, 101', 101") into which extends a neck (75; 85, 85'; 95, 95'; 105, 105', 105") designed to place the resonant cavity (71; 81, 81'; 91, 91'; 101, 101', 101") of the guide cone (7, 8, 9, 10) in communication with the outside of the guide cone (7, 8, 9, 10) to form a noise attenuator (7, 8, 9, 10) having a Helmholtz resonator structure, designed to attenuate the sound waves emitted by the turbine engine.

2. The turbine engine as claimed in claim 1, in which the length of the neck (75; 85, 85'; 95, 95'; 105, 105', 105"), the volume of the resonant cavity (71; 81, 81'; 91, 91'; 101, 101', 101") and the cross section of the neck (75; 85, 85'; 95, 95'; 105, 105', 105") are adapted so that the resonant cavity (71; 81, 81'; 91, 91'; 101, 101', 101") of the guide cone (7, 8, 9, 10) resonates at a predetermined resonant frequency f.

3. The turbine engine as claimed in claim 2, in which the resonant frequency f is below 400 Hz.

4. The turbine engine as claimed in one of claims 1 to 3, in which the guide cone (7, 8, 9, 10) comprises an interior partition wall (87; 97; 107, 107', 107") designed to limit the volume of the resonant cavity (71; 81, 81'; 91, 91'; 101, 101', 101").

5. The turbine engine as claimed in claims 1 to 4, in which the guide cone (7, 8, 9) comprises an interior partition wall (87, 97) designed to compartmentalize the total interior volume of the guide cone (7, 8, 9) into at least a first resonant cavity (81, 91) and a second resonant cavity (81', 91') respectively having a first resonant frequency f1 and a second resonant frequency f2.

6. The turbine engine as claimed in claim 5, in which the first and second resonant frequencies f1, f2 are different and below 400 Hz.

7. The turbine engine as claimed in claim 5, the guide cone of which comprises more than two partition walls.
